# EUROPEAN PATENT SPECIFICATION

(11) **EP 3 026 218 B1**
(45) Date of publication and mention of the grant of the patent: **14.06.2017**
(21) Application number: 14195265.5
(22) Date of filing: 27.11.2014
(51) Int. Cl.: F01D 9/02, F01D 11/00, F01D 9/04

(54) **First stage turbine vane arrangement**
Schaufelanordnung der ersten Stufe einer Turbine
Dispositif d'aube du premier étage de turbine

(43) Date of publication of application: 01.06.2016
(73) Proprietor: Ansaldo Energia Switzerland AG, 5401 Baden (CH)
(72) Inventor: Graf, Frank, 5415 Nussbaumen (CH); Mathews, Hans-Christian, 8057 Zürich (CH); Fleuriot, Fabien, 68125 Rosenau (FR); Benz, Urs, 5073 Gipf-Oberfrick (CH)
(74) Representative: Bernotti, Andrea

(56) References cited:
- US-A1- 2006 288 707
- US-A1- 2009 115 141
- US-B1- 6 450 762

## Description

### Technical field

The disclosure relates to first stage vane arrangement for receiving a combustor transition piece which guides hot gases from the combustor to the turbine at the interface from a combustor to a turbine.

### Background of the disclosure

Gas turbines with can combustors are known from various applications in power plants. Typically a plurality of combustors is disposed in an annular array about the axis of the turbine. Hot combustion gases flow from each combustor through a respective transition piece into the first stage vane. In addition to relative movement, e.g. due to dynamic pulsing between these components, the transition pieces and first stage vane are made of different materials and are subjected to different temperatures during operation, thereby experiencing different degrees of thermal growth. Support frames which support and guide the transition piece at the turbine inlet have been proposed to allow such a "mismatch" at the interface of the transition pieces and the first stage vane. To allow movement between the transition piece and the support frames the US 2009/0115141 A1 suggests the use of sealed slots. The described arrangement is intended to allow radial, circumferential and axial relative movements. However, radial, circumferential and axial relative movements of hot gas path sections relative to each other are difficult to seal and can lead to steps at the interface between the side walls of such an arrangement. These steps are detrimental to the aerodynamics of the turbine, they can cause local high heat loads due to turbulences they might induce in the boundary layer.

US2006/288707 discloses also a turbine vane arrangement.

### Summary of the disclosure

An improved first stage turbine vane arrangement is suggested in order to assure good aerodynamics in the hot gas flow path and reliable cooling. Lifetime is increased and power and efficiency losses due to steps in a hot gas flow path and large cooling gas consumption, as well as increased emissions due to uncontrolled cooling gas flows, are avoided.

The present disclosure relates to a first stage vane arrangement for receiving a combustor transition piece from a can combustor to the turbine inlet adapted to guide combustion gases in a hot gas flow path extending between a gas turbine can combustor and a first stage of turbine. The combustor transition piece comprises a duct having an inlet at an upstream end adapted for connection to the can combustor and an outlet at a downstream end adapted for connection to a first stage of a turbine. Typically each outlet is inserted into a picture frame receptacle formed by a frame segment. The downstream end of the combustor transition piece comprises combustor transition walls. Typically these are an outer wall, an inner wall, as well as two combustor transition side walls.

The inlet of a combustor transition typically has the same cross section as the can combustor to which the transition piece is attached. These can for example be a circular, an oval or a rectangular cross section. The outlet typically has the form of a segment of an annulus. A plurality of combustor transitions installed in the gas turbine form an annulus for guiding the hot gas flow into the turbine.

According to a first embodiment the first stage vane arrangement comprises a vane carrier, an array of first stage vanes, and an array of frame segments for axially receiving aft ends of a combustor transition pieces.

The vanes comprise an outer platform, an inner platform, an airfoil, extending between said outer and inner platforms, an outer suspension for pivotable connection of the vane to the vane carrier. The vanes further comprise an inner rim segment which extends radially inwards from the inner platform.

The frame segments comprise an I-beam with an upper horizontal element, a lower horizontal element, and a vertical web, and a fixation to the vane carrier. From the lower horizontal element at least one arm extends in axial direction below the inner rim segment for supporting the inner platform of the vane and for sealing a gap between the inner platform and the lower horizontal element.

The pivotable connection is arranged such that the vane can rock around an axis which is normal to the longitudinal direction of the airfoil, i.e. the direction from inner platform to outer platform, and normal to the axial direction of the gas turbine when the vane is installed in a turbine. Such a pivotable vane is also called rocking vane.

The pivotable connection can for example be a projection extending against the axial direction from a vertical wall of the vane carrier into a notch in a vertical side wall of the outer platform, or a projection extending in axial direction from a vertical side wall of the outer platform into a notch in a vertical side wall of the vane carrier. The vertical direction is the direction from the inner platform to the outer platform of the vane. A side wall is a wall terminating in axial direction, i.e. a wall in a plane normal to the axis of the gas turbine.

The arm which is extending from the lower horizontal element below the inner rim segment for supporting the inner platform of the vane facilitates the alignment of inner platform of the rocking vane with exit of a combustor transition piece which can be axially inserted into the frame segments.

According to a further embodiment of the first stage vane arrangement an outer rim segment extends radially outwards from the arm. The outer rim limits the axial movement of the vane relative to the lower horizontal element. In addition the combination of outer rim and inner rim improves the sealing in a labyrinth like manner.

More specifically the outer rim segment and the arm form an L-shaped hock for supporting the rocking vane wherein the inner rim engages in the hock.

In another embodiment of the first stage vane arrangement an inner seal is attached to an outer face of the arm for sealing a gap between the inner rim segment and the arm. Alternatively or in combination an inner seal can be attached to an inner face of the inner platform for sealing a gap between the outer rim segment and the inner platform. An outer face is a surface facing radially away from the axis of the gas turbine when the arrangement is installed in a gas turbine and an inner face is a surface facing radially inwards.

According to a further embodiment of the first stage vane arrangement an inner seal is arranged between the sides of the inner rim segment and the outer rim segment which are facing each other. Alternatively or in combination an inner seal is arranged between the sides of the inner rim segment and the lower horizontal element which are facing each other.

The inner seal can be configured as a honeycomb seal. According to one embodiment the webs of the honeycombs of the inner seal are orientated parallel to the outer face of the arm. Thus the webs can deflect easily if a force is imposed on them by the inner rim segment. The honeycomb can act as a spring closing the gap. The inner rim, respectively the honeycomb with the inner rim segment can hold the rocking vane into a preferred position.

In a further embodiment the fixation for mounting the frame segment to vane carrier comprises at least one ear. The ear can be attached radially outwards of the upper horizontal element for bolting the frame segment to the vane carrier.

According to yet another embodiment of the first stage vane arrangement the outer horizontal element has a mounting face and the vane carrier has matching mounting face for mounting the frame segment to the vane carrier in a substantially gas tight manner. For gas tight mounting the mounting faces can have substantially flat smooth facing each other and which are pressed onto each other during assembly.

In a more specific embodiment a seal is arranged between the mounting face of the outer horizontal element and the matching mounting face of the vane carrier. The seal can for example be a rope seal. A notch in circumferential direction around the axis of the gas turbine can be provided in the mounting face of the outer horizontal element or in the mounting face of the vane carrier for receiving the rope seal.

In another embodiment the first stage vane arrangement comprises a combustor transition piece with a duct having an inlet at an upstream end adapted for connection to a combustor, and an outlet at an aft end wherein the aft end is adapted for axial insertion into a frame formed by two neighboring frame segments. To reduce cooling air leakages a seal is arranged between the outer surface of the combustor transition wall of the combustor transition piece's aft end and the surface of the frame segment facing the combustor transition wall of the combustor transition piece.

The seal can for example be arranged in a plane normal to the axis of the gas turbine and spanning around the outside of the combustor transition piece.

According to a further embodiment the seal between combustor transition wall and the frame segment is an E-seal. The E seal can be inserted between two strips which span around the combustor transition wall and which are axially displaced to define a slot. Alternatively two strips can also extend from the frame segment towards the combustor transition wall. These can also be axially displaced to define a slot for receiving the E-seal. The strips can be an integral part of the combustor transition wall, respectively of the frame segment, or attached to it.

Further, a gas turbine comprising such a first stage vane arrangement is an object of the disclosure. The proposed gas turbine has at least one compressor, at least one turbine, and at least one can combustor with a transition piece and a first stage vane arrangement according to the disclosure.

In addition to the first stage vane arrangement and a gas turbine comprising such a first stage vane arrangement a Method for assembly of a first stage vane arrangement is a subject of the disclosure.

The method for assembly of a first stage vane arrangement comprises the steps of
- providing a first stage vane arrangement with a vane carrier, an array of first stage vanes, and an array of frame segments for axially receiving aft ends of a combustor transition pieces;
- mounting the vanes to the vane carrier by engaging the outer suspension in a pivotable connection,
- engaging the arm of the lower horizontal element to the inner rim segment from a radially inner position, and
- pushing the frame segments against vane carrier and mounting the outer fixation to the vane carrier.

In such a first stage vane arrangement the vanes comprise an outer platform, an inner platform, an airfoil, extending between said outer and inner platforms. The vanes have an outer suspension for pivotable connection of the vane to the vane carrier, and an inner rim segment which is extending radially inwards from the inner platform.

In such a first stage vane arrangement the frame segments comprise an I-beam with an upper horizontal element, a lower horizontal element, a vertical web, and an outer fixation to the vane carrier. For supporting the inner platform of the vane and for sealing a gap between the inner platform and the lower horizontal element an arm is extending from the lower horizontal element in axial direction below the inner rim segment.

The above described combustor transition, can combustor and gas turbine can be a single combustion gas turbine or a sequential combustion gas turbine as known for example from EP 0 620 363 B1 or EP 0 718 470 A2. It can also be a combustor transition of a gas turbine with one of the combustor arrangements described in the WO 2012/136787.

### Brief description of the drawing

The invention, its nature as well as its advantages, shall be described in more detail below with the aid of the accompanying drawings. Referring to the drawings:
Fig. 1 a shows an example of a gas turbine according to the present invention.
Fig. 1b shows the cross section b - b of the turbine inlet with combustor transitions of the gas turbine from Fig. 1a.
Fig. 1c shows an example of an annular arrangement of frame segments for receiving the aft ends of the transition pieces shown in Fig. 1 b.
Fig. 2 shows the outlet of a combustor transition piece inserted in a frame segment together with a supporting vane carrier and a first stage vane of a turbine.
Fig. 3 shows an example of a frame segment's lower horizontal element with the seal and support interface to the inner platform of a vane.
Figs. 3a, 3b. 3c, 3d, and 3e show details of a seal between a frame segment and an inner platform.
Fig. 4 shows an example of a frame segment with two transition pieces inserted.
Fig. 5 shows another perspective view of an example of a frame segment of Fig. 4.

### Embodiments of the disclosure

The same or functionally identical elements are provided with the same designations below. The examples do not constitute any restriction of the invention to such arrangements.

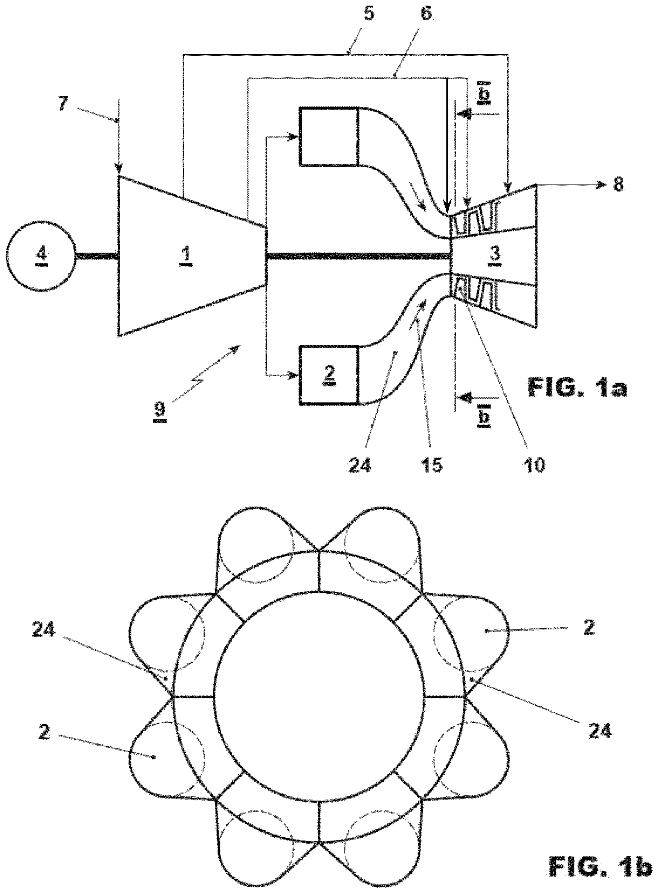

An exemplary arrangement is shown in Fig. 1a. The gas turbine 9 is supplied with compressor inlet gas 7. In the gas turbine 9 a compressor 1 is followed by a combustion chamber comprising a plurality of can combustors 2. Hot combustion gases are fed into a turbine 3 via a plurality of combustor transition pieces 24. The can combustors 2 and combustor transition pieces 24 form a hot gas flow path 15 leading to the turbine 3. The combustor transition pieces 24 connect the can combustors 2 of the combustion chamber with the first stage vane 10 of the turbine 3.

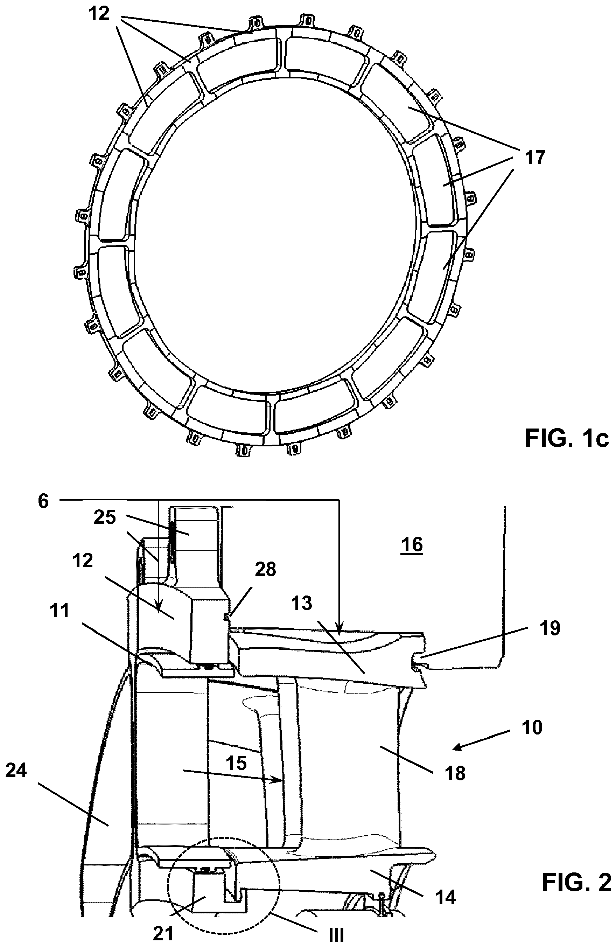

Cooling gas 5, 6 is branched off from the compressor 1 to cool the turbine 3, the combustor 2 (not shown) and a frame segment (not shown in Fig. 1). In this example the cooling systems for high pressure cooling gas 6 and low pressure cooling gas 5 are indicated.

Exhaust gas 8 leaves the turbine 3. The exhaust gas 8 is typically used in a heat recovery steam generator to generate steam for cogeneration or for a water steam cycle in a combined cycle (not shown).

The combustor transition pieces 24 of the gas turbine 9 of the cross section B-B are shown in Fig. 1b. The combustor transition pieces 24 guide the hot gases from the can combustors 2 to the turbine 3 and are arranged to form an annular hot gas duct at the turbine inlet.

Fig. 1c shows an example of an annular arrangement of frame segments 12 for receiving the aft ends of the combustor transition pieces 24. Neighboring pairs of frame segments 12 form a picture frame receptacle 17 which can receive an aft end or outlet of a combustor transition piece (not shown).

An example for the interface between combustor transition piece 24 and the first stage vane 10 of a turbine 3 is shown in more detail in Fig. 2. The combustor transition piece 24 is defined by the combustor transition wall 11, which confines the hot gas flow path 15. At the outlet of the combustor transition piece 24 the cross section of each combustor transition piece has the geometrical shape of a sector of the annulus, which forms the hot gas flow path 15 at the turbine inlet. The hot gas flow path 15 continues into the space between the first stages vanes 10 of the turbine 3. The inner platforms 14 and outer platforms 13 delimit the hot gas flow path 15 in the turbine inlet. The airfoils 18 of the turbine vanes 10 extend in radial direction between the inner platform 14 and outer platform 13 of the vane 10 and at least partly divide the hot gas flow path 15 in the circumferential direction. At the outlet to the turbine (also called aft end) the combustor transition pieces 24 are supported and kept in their position by frame segments 12. The frame segments 12 and the first stage vanes 10 are supported by and fixed to a vane carrier 16. High pressure cooling gas can be supplied to the frame segments 12 and first stage vanes 10. A seal 33 is arranged between the outside of the combustor transition wall 11 and the receiving frame segments 12. The gap between the combustor transition wall 11 and the receiving frame segments 12 is typically pressurized with cooling gas. The seal 33 prevents unnecessary loss of cooling gas through this gap into the hot gas flow path 15.

A front seal 28 can be installed between the frame segment12 and the vane carrier 16.

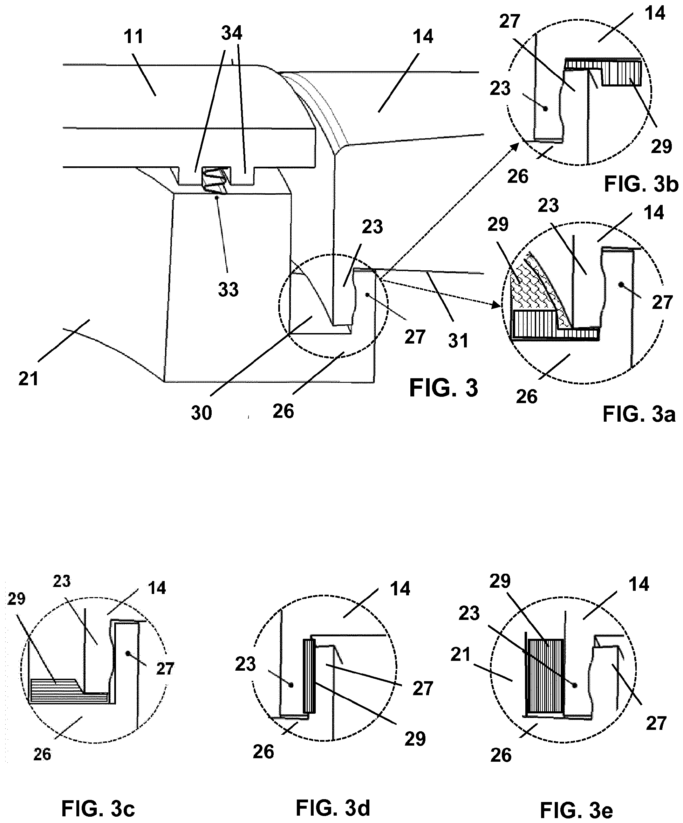

The sealing and supporting interface between the lower horizontal element 21 and the inner platform 14 is indicated by the dotted circle III and shown in more detail in Fig. 3.

Fig. 3 shows a close-up of an example of a frame segment's lower horizontal element 21 with seal and support interface to the inner platform 14 of a vane 10 (encircled as section III in Fig. 2) and wall seal 33 arranged between the combustor transition wall 11 and the frame segment 12.

Two strips 34 extend from the combustor transition wall 11 into the gap between the combustor transition wall 11 and the frame segment 12 (here only shown at the section between the wall and the lower horizontal element 21) and span around the combustor transition wall 11. They are axially displaced to define a slot in which an E-seal 33 is inserted. The seal allow axial movement of the combustor transition wall 11 relative to the frame segment 12 and seals the gap between the two pieces.

In this example an arm 26 extends from the lower horizontal element 21 in axial direction towards the inner platform 14 (of the gas turbine when the segment is installed). At the axial end of the arm 26 an outer rim segment 27 extends radially outwards in the direction of an inner face 31 of the inner platform 14. The arm 26 with the outer rim segment 27 form an L-shaped hook. This L-shaped hocks behind the inner rim segment 23 which extends radially inwards at an upstream end from the inner face 31 of the inner platform 14.

The inner platforms 14 of all vanes of the first turbine stage form a ring. The inner faces 31 of the inner platforms 14 from a cylindrical inner face. The outer rim segments 27 of all frame segments form a ring which fits into the cylinder formed by the inner platforms 14. It is sealing a space below the inner platform 14 and the hot gas flow path above the inner platform 14. In addition the outer rim segments 27 support the inner platform 14 and can keep it in the correct position aligned with the aft end of the combustor transition wall 11.

As shown in the close-up view in Fig. 3a an inner seal 29 can be attached to outer face 30 of the arm 26, i.e. the side of the arm 26 which is facing towards the inner rim segment 23 for better sealing. During assembly the inner rim segment 23 is pressed against the inner seal 29. In this arrangement radial forces are transferred via the outer rim segment 27 to the inner face 31 of the inner platform. In the example shown the inner seal 29 is configured as a honeycomb seal with the webs orianted in radial direction.

Fig. 3c is based on Fig. 3a. In this example the webs of the honeycombs of the inner seal 29 are orientated parallel to the outer face 30 of the arm 26. Thus the webs can deflect more easily if a force is imposed on them by the inner rim segment 23. The honeycomb can act as a spring closing the gap and pushes the rocking vane 10 into a preferred position.

Alternatively an inner seal 29 can be attached to inner face 31 of the inner platform 14 next to the inner rim segment 23 for better sealing. During assembly the outer rim segment 27 is pressed against the inner seal 29. In this arrangement radial forces are transferred via the inner rim segment 23 to the outer face 30 of the arm 26. An example for such a configuration is shown in the close-up view in Fig. 3b. In the example shown the inner seal 29 is configured as a honeycomb seal.

Fig. 3d shows another alternative. Here the inner seal 29 is arranged between the sides of the inner rim segment 23 and the outer rim segment 27 which are facing each other.

Fig. 3e shows yet another alternative. Here the inner seal 29 is arranged between the sides of the inner rim segment 23 and the lower horizontal element 21 which are facing each other.

In Figs. 3d and 3e the inner seal is configured as a honeycomb with webs orientated parallel to the inner ring segment's 23 surface. Thus the webs can deflect more easily if a force is imposed on them by the inner rim segment 23. The honeycomb can act as a spring closing the gap and pushes the rocking vane 10 into a preferred position.

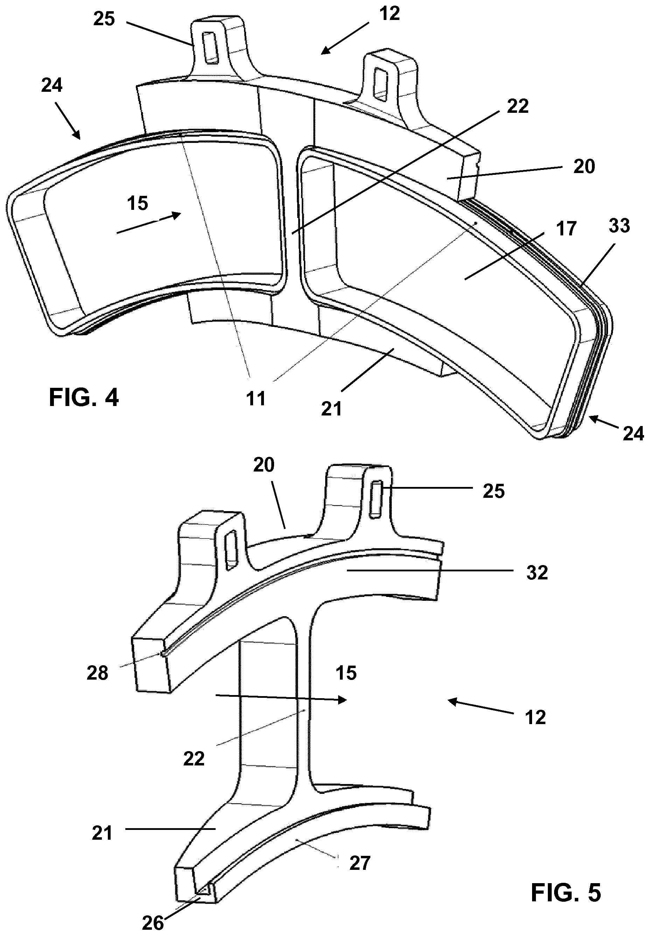

Fig. 4 shows a perspective view of an example of a frame segment 12 with two combustor transition pieces 24 inserted. The frame segment 12 consist of a vertical web 22 with an upper horizontal element 20 arranged radially outside of the vertical web 22, and a lower horizontal element 21 arranged radially inside of the vertical web 22 when installed in a gas turbine. The frame segment 12 comprises two ears 25 for fixation to a vane carrier. They extend in radial direction from the upper horizontal element 20. The combustor transition pieces 24 open in flow direction on both sides of the downstream end of the vertical web 22.

Fig. 5 shows another perspective view of an example of a frame segment 12 of Fig. 4. The Fig. 5 shows a mounting face 32 of the upper horizontal element 20 which is facing in downstream direction of the hot gas flow 15 towards the vane carrier for attachment to the vane carrier. In the mounting face 32 a front seal 28 is indicated. The front seal 28 can be kept in a seal grove. The seal spans in circumferential direction around the axis of the gas turbine. When installed the front seals 28 form a ring spanning around the annular hot gas flow path and seal the interface between the frame segments and the vane carrier. The front seal 28 can for example be a rope seal.

### List of designations

- 1: Compressor
- 2: Can combustor
- 3: Turbine
- 4: Generator
- 5: Low pressure cooling gas
- 6: High pressure cooling gas
- 7: Ambient air
- 8: Exhaust gas
- 9: Gas turbine
- 10: Vane
- 11: Combustor transition wall
- 12: Frame segment
- 13: Outer platform
- 14: Inner platform
- 15: Hot gas flow path
- 16: Vane carrier
- 17: Picture frame receptacle
- 18: Airfoil
- 19: Suspension
- 20: Upper horizontal element
- 21: Lower horizontal element
- 22: Vertical web
- 23: Inner rim segment
- 24: Combustor transition piece
- 25: Fixation
- 26: Arm
- 27: Outer rim segment
- 28: Front seal
- 29: Inner seal
- 30: Outer face
- 31: Inner face
- 32: Mounting face
- 33: Seal
- 34: Strip

## Claims

1. A first stage vane arrangement with a vane carrier (16), an array of first stage vanes (10), and an array of frame segments (12) for axially receiving aft ends of a combustor transition pieces (24),
the first stage vanes (10) comprising: an outer platform (13), an inner platform (14), an airfoil (18), extending between said outer platform (13) and inner platform (14), an outer suspension (19) for pivotable connection of the vane (10) to the vane carrier (16), and an inner rim segment (23) extending radially inwards from the inner platform **characterized in that** the frame segments (12) comprises: an I-beam with an upper horizontal element (20), a lower horizontal element (21), a vertical web (22), a fixation (25) to the vane carrier (16), and an arm (26) extending from the lower horizontal element (21) in axial direction below the inner rim segment (23) for supporting the inner platform (14) of the vane (10) and for sealing a gap between the inner platform (14) and the lower horizontal element (21).

2. A first stage vane arrangement according to claim 1, **characterized in that** an outer rim segment (27) extends radially outwards from the arm (26).

3. A first stage vane arrangement according to claim 2, **characterized in that** an outer rim segment (27) and the arm (26) form a L-shaped hook for supporting the pivotable vane (10).

4. A first stage vane arrangement according to one of the preceding claims, **characterized in that** an inner seal (29) is arranged between an outer face (30) of the arm (26) and the inner rim segment (23) for sealing a gap between the inner rim segment (23) and the arm (26) and/or **in that** an inner seal (29) is arranged between an inner face (31) of the inner platform (14) and the outer rim segment (27) for sealing a gap between the outer rim segment (27) and the inner platform (14).

5. A first stage vane arrangement according to one of the preceding claims, **characterized in that** an inner seal (29) is arranged between the sides of the inner rim segment (23) and the outer rim segment (27) which are facing each other and/or that an inner seal (29) is arranged between the sides of the inner rim segment (23) and the lower horizontal element (21) which are facing each other.

6. A first stage vane arrangement according to one of the preceding claims, **characterized in that** the fixation (25) for mounting the frame segment (12) to vane carrier (16) comprises at least one ear.

7. A first stage vane arrangement according to one of the preceding claims, **characterized in that** the outer horizontal element (20) has a mounting face (32) and **in that** the vane carrier has matching mounting face for mounting the frame segment to the vane carrier (16) in a substantially gas tight manner.

8. A first stage vane arrangement according to claim 7, **characterized in that** a front seal (28) is arranged between the mounting face (32) of the outer horizontal element (20) and the matching mounting face of the vane carrier (16).

9. A first stage vane arrangement according to one of the preceding claims, **characterized in that** it comprises a combustor transition piece (24) with a duct having an inlet at an upstream end adapted for connection to a combustor (2), an outlet at an aft end wherein the aft end is adapted for axial insertion into a frame formed by two neighboring frame segments (12), and wherein a wall seal (33) is arranged between the outer surface of the combustor transition wall (11) of the combustor transition piece (24) aft end and a surface of the frame segment (12) facing the wall (11) of the combustor transition piece (24).

10. A first stage vane arrangement according to claim 9, **characterized in that** the wall seal (33) between combustor transition wall (11) and the frame segment (12) is an E-seal.

11. A gas turbine (9) with at least one compressor (1), at least one turbine (3), and at least one combustion chamber (2) with a combustor transition piece (24), **characterized in that** it comprises first stage vane arrangement according to one of the claims 1 to 10.

12. A method for assembly of a first stage vane arrangement comprising the steps of
- providing a first stage vane arrangement with:
a vane carrier (16), an array of first stage vanes (10), and an array of frame segments (12) for axially receiving aft ends of a combustor transition pieces (24),
the vanes (10) comprising: an outer platform (13), an inner platform (14), an airfoil (18), extending between said outer platform (13) and inner platform (14), an outer suspension (19) in a pivotable connection of the vane (10) to the vane carrier (16), and an inner rim segment (23) extending radially inwards from the inner platform (14), **characterized in that** the frame segments (12) comprises an I-beam with an upper horizontal element (20), a lower horizontal element (21), a vertical web (22), a fixation (25) to the vane carrier (16), and an arm (26) extending from the lower horizontal element (21) in axial direction below the inner rim segment (23) for supporting the inner platform (14) of the vane (10) and for sealing a gap between the inner platform (14) and the lower horizontal element (21), the method **characterized by** the steps of :
- mounting the vanes (10) to the vane carrier (16) by engaging the outer suspension (19) for pivotable connection,
- engaging the arm (26) of the lower horizontal element (21) to the inner rim segment (23) from a radially inner position,
- pushing the frame segments (12) against vane carrier (16) and mounting the fixation (25) to the vane carrier (16).

## Patentansprüche

1. Schaufelanordnung einer ersten Stufe mit einem Schaufelträger (16), einer Reihe von Schaufeln (10) der ersten Stufe und einer Reihe von Rahmensegmenten (12) zum axialen Aufnehmen von hinteren Enden von Brennkammerübergangsstücken (24),
wobei die Schaufeln (10) der ersten Stufe Folgendes umfassen: eine äußere Plattform (13), eine innere Plattform (14), ein Strömungsprofil (18), das sich zwischen der äußeren Plattform (13) und der inneren Plattform (14) erstreckt, eine äußere Federung (19) zur schwenkbaren Verbindung der Schaufel (10) mit dem Schaufelträger (16) und ein inneres Randsegment (23), das sich von der inneren Plattform radial nach innen erstreckt, **dadurch gekennzeichnet, dass**
die Rahmensegmente (12) Folgendes umfassen: einen I-Träger mit einem oberen horizontalen Element (20), einem unteren horizontalen Element (21), einem vertikalen Steg (22), einer Befestigung (25) an dem Schaufelträger (16), und einem Arm (26), der sich von dem unteren horizontalen Element (21) in axialer Richtung unter dem inneren Randsegment (23) erstreckt, um die innere Plattform (14) der Schaufel (10) zu tragen und um einen Spalt zwischen der inneren Plattform (14) und dem unteren vertikalen Element (21) abzudichten.

2. Schaufelanordnung einer ersten Stufe nach Anspruch 1, **dadurch gekennzeichnet, dass** sich ein äußeres Randsegment (27) von dem Arm (26) radial nach außen erstreckt.

3. Schaufelanordnung einer ersten Stufe nach Anspruch 2, **dadurch gekennzeichnet, dass** ein äußeres Randsegment (27) und der Arm (26) einen L-förmigen Haken zum Tragen der schwenkbaren Schaufel (10) bilden.

4. Schaufelanordnung einer ersten Stufe nach einem der vorhergehenden Ansprüche, **dadurch gekennzeichnet, dass** eine innere Dichtung (29) zwischen einer äußeren Fläche (30) des Arms (26) und dem inneren Rahmensegment (23) angeordnet ist, um einen Spalt zwischen dem inneren Rahmensegment (23) und dem Arm (26) abzudichten, und/oder dass eine innere Dichtung (29) zwischen einer inneren Fläche (31) der inneren Plattform (14) und dem äußeren Randsegment (27) angeordnet ist, um einen Spalt zwischen dem äußeren Randsegment (27) und der inneren Plattform (14) abzudichten.

5. Schaufelanordnung einer ersten Stufe nach einem der vorhergehenden Ansprüche, **dadurch gekennzeichnet, dass** eine innere Dichtung (29) zwischen den Seiten des inneren Randsegments (23) und des äußeren Randsegments (27), die einander gegenüberliegen, angeordnet ist, und/oder dass eine innere Dichtung (29) zwischen den Seiten des inneren Randsegments (23) und des unteren horizontalen Elements (21), die einander gegenüber liegen, angeordnet ist.

6. Schaufelanordnung einer ersten Stufe nach einem der vorhergehenden Ansprüche, **dadurch gekennzeichnet, dass** die Befestigung (25) zum Montieren des Rahmenelements (12) an den Schaufelträger (16) mindestens eine Öse umfasst.

7. Schaufelanordnung einer ersten Stufe nach einem der vorhergehenden Ansprüche, **dadurch gekennzeichnet, dass** das äußere horizontale Element (20) eine Montagefläche (32) aufweist und dass der Schaufelträger eine passende Montagefläche zum Montieren des Rahmensegments an den Schaufelträger (16) in einer im Wesentlichen gasdichten Weise aufweist.

8. Schaufelanordnung einer ersten Stufe nach Anspruch 7, **dadurch gekennzeichnet, dass** eine vordere Dichtung (28) zwischen der Montagefläche (32) des äußeren horizontalen Elements (20) und der passenden Montagefläche des Schaufelträgers (16) angeordnet ist.

9. Schaufelanordnung einer ersten Stufe nach einem der vorhergehenden Ansprüche, **dadurch gekennzeichnet, dass** sie Folgendes umfasst: ein Brennkammerübergangsstück (24) mit einem Kanal, der an einem stromaufwärtigen Ende einen Einlass aufweist, der für eine Verbindung mit einer Brennkammer (2) ausgelegt ist, einen Auslass an einem hinteren Ende, wobei das hintere Ende für axiales Einsetzen in einen Rahmen ausgelegt ist, der durch zwei benachbarte Rahmensegmente (12) gebildet ist und wobei eine Wanddichtung (33) zwischen der äußeren Oberfläche der Brennkammerübergangswand (11) des hinteren Endes des Brennkammerübergangsstücks (24) und einer Oberfläche des Rahmensegments (12), die der Wand (11) des Brennkammerübergangsstücks (24) gegenüberliegt, angeordnet ist.

10. Schaufelanordnung einer ersten Stufe nach Anspruch 9, **dadurch gekennzeichnet, dass** die Wanddichtung (33) zwischen der Brennkammerübergangswand (11) und dem Rahmensegment (12) eine E-Dichtung ist.

11. Gasturbine (9) mit mindestens einem Kompressor (1), mindestens einer Turbine (3) und mindestens einer Brennkammer (2) mit einem Brennkammerübergangsstück (24), **dadurch gekennzeichnet, dass** sie eine Schaufelanordnung einer ersten Stufe nach einem der Ansprüche 1 bis 10 umfasst.

12. Verfahren zur Montage einer Schaufelanordnung einer ersten Stufe, das die folgenden Schritte umfasst:
- Bereitstellen einer Schaufelanordnung einer ersten Stufe mit:
einem Schaufelträger (16), einer Reihe von Schaufeln (10) der ersten Stufe und einer Reihe von Rahmensegmenten (12) zum axialen Aufnehmen von hinteren Enden von Brennkammerübergangsstücken (24),
wobei die Schaufeln (10) Folgendes umfassen: eine äußere Plattform (13), eine innere Plattform (14), ein Strömungsprofil (18), das sich zwischen der äußeren Plattform (13) und der inneren Plattform (14) erstreckt, eine äußere Federung (19) zur schwenkbaren Verbindung der Schaufel (10) mit dem Schaufelträger (16), und ein inneres Randsegment (23), das sich von der inneren Plattform radial nach innen erstreckt, **dadurch gekennzeichnet, dass**
die Rahmensegmente (12) Folgendes umfassen: einen I-Träger mit einem oberen horizontalen Element (20), einem unteren horizontalen Element (21), einem vertikalen Steg (22), einer Befestigung (25) an dem Schaufelträger (16), und einem Arm (26), der sich von dem unteren horizontalen Element (21) in axialer Richtung unter dem inneren Randsegment (23) erstreckt, um die innere Plattform (14) der Schaufel (10) zu tragen und um einen Spalt zwischen der inneren Plattform (14) und dem unteren vertikalen Element (21) abzudichten,
wobei das Verfahren **gekennzeichnet ist durch** die folgenden Schritte:
- Montieren der Schaufeln (10) an den Schaufelträger (16) durch Einrasten der äußeren Federung (19) für eine schwenkbare Verbindung,
- Einrasten des Arms (26) des unteren horizontalen Elements (21) in das innere Randsegment (23) aus einer radialen inneren Position,
- Drücken des Rahmensegments (12) gegen den Schaufelträger (16) und Montieren der Befestigung an den Schaufelträger (16).

## Revendications

1. Agencement d'aubes d'un premier étage doté d'un support d'aubes (16), d'un ensemble d'aubes d'un premier étage (10), et d'un ensemble de segments de bâti (12) destiné à recevoir de manière axiale les extrémités arrière des éléments de transition d'une chambre de combustion (24) ;
les aubes d'un premier étage (10) comprenant : une plate-forme extérieure (13), une plate-forme intérieure (14), un profil aérodynamique (18) qui s'étend entre lesdites plate-forme extérieure (13) et plate-forme intérieure (14), une suspension extérieure (19) destinée à une connexion capable de pivoter entre l'aube (10) et le support d'aubes (16), et un segment de collerette intérieur (23) qui s'étend de manière radiale vers l'intérieur à partir de la plate-forme intérieure ;
**caractérisé en ce que** :
les segments de collerette (12) comprennent : une poutre en I dotée d'un élément horizontal supérieur (20), d'un élément horizontal inférieur (21), d'une âme verticale (22), d'une fixation (25) au support d'aubes (16), et d'un bras (26) qui s'étend à partir de l'élément horizontal inférieur (21) dans une direction axiale sous le segment de collerette intérieur (23), destiné à soutenir la plate-forme intérieure (14) de l'aube (10) et à calfeutrer un espace situé entre la plate-forme intérieure (14) et l'élément horizontal inférieur (21).

2. Agencement d'aubes d'un premier étage selon la revendication 1, **caractérisé en ce qu'**un segment de collerette extérieur (27) s'étend de manière radiale vers l'extérieur à partir du bras (26).

3. Agencement d'aubes d'un premier étage selon la revendication 2, **caractérisé en ce qu'**un segment de collerette extérieur (27) et le bras (26), forment un crochet en forme de L destiné à soutenir l'aube capable de pivoter (10).

4. Agencement d'aubes d'un premier étage selon l'une quelconque des revendications précédentes, **caractérisé en ce qu'**un joint d'étanchéité intérieur (29) est agencé entre une face extérieure (30) du bras (26) et le segment de collerette intérieur (23), destiné à calfeutrer l'espace entre le segment de collerette intérieur (23) et le bras (26), et / ou **en ce qu'**un joint d'étanchéité intérieur (29) est agencé entre une face intérieure (31) de la plate-forme intérieure (14) et le segment de collerette extérieur (27), destiné à calfeutrer un espace entre le segment de collerette extérieur (27) et la plate-forme intérieure (14).

5. Agencement d'aubes d'un premier étage selon l'une quelconque des revendications précédentes, **caractérisé en ce qu'**un joint d'étanchéité intérieur (29) est agencé entre les côtés du segment de collerette intérieur (23) et le segment de collerette extérieur (27) qui se font face, et / ou **en ce qu'**un joint d'étanchéité intérieur (29) est agencé entre les côtés du segment intérieur de la collerette (23) et l'élément horizontal inférieur (21) qui se font face l'un à l'autre.

6. Agencement d'aubes d'un premier étage selon l'une quelconque des revendications précédentes, **caractérisé en ce que** la fixation (25) destinée à monter le segment de bâti (12) sur le support d'aubes (16), comprend au moins une patte.

7. Agencement d'aubes d'un premier étage selon l'une quelconque des revendications précédentes, **caractérisé en ce que** l'élément horizontal extérieur (20) présente une face de montage (32), et **en ce que** le support d'aubes présente une face de montage correspondante, de façon à monter le segment de bâti sur le support d'aubes (16) d'une manière sensiblement étanche aux gaz.

8. Agencement d'aubes d'un premier étage selon la revendication 7, **caractérisé en ce qu'**un joint d'étanchéité avant (28) est agencé entre la face de montage (32) de l'élément horizontal extérieur (20) et la face de montage correspondante du support d'aubes (16).

9. Agencement d'aubes d'un premier étage selon l'une quelconque des revendications précédentes, **caractérisé en ce qu'**il comprend un élément de transition de chambre de combustion (24) doté d'un conduit présentant une entrée située au niveau d'une extrémité amont adaptée à une connexion à une chambre de combustion (2), une sortie au niveau d'une extrémité arrière, dans lequel l'extrémité arrière est adaptée à une insertion axiale dans un bâti constitué par deux segments de bâti voisins (12), et dans lequel un joint d'étanchéité de paroi (33) est agencé entre la surface extérieure de la paroi de transition de chambre de combustion (11) de l'extrémité arrière de l'élément de transition de chambre de combustion (24), et une surface du segment de bâti (12) qui fait face à la paroi (11) de l'élément de transition de chambre de combustion (24).

10. Agencement d'aubes d'un premier étage selon la revendication 9, **caractérisé en ce que** le joint d'étanchéité de paroi (33) situé entre la paroi de transition de chambre de combustion (11) et le segment de bâti (12), est un joint d'étanchéité en E.

11. Turbine à gaz (9) dotée d'un compresseur (1) au moins, d'une turbine (3) au moins, et d'une chambre de combustion (2) au moins avec un élément de transition de chambre de combustion (24), **caractérisée en ce qu'**elle comprend un agencement d'aubes d'un premier étage selon l'une quelconque des revendications 1 à 10.

12. Procédé destiné à assembler un agencement d'aubes d'un premier étage, comprenant les étapes consistant à :
- fournir un agencement d'aubes d'un premier étage doté :
d'un support d'aubes (16), d'un ensemble d'aubes d'un premier étage (10), et d'un ensemble de segments de bâti (12) destiné à recevoir de manière axiale les extrémités arrière des éléments de transition de chambre de combustion (24) ;
les aubes (10) comprenant : une plate-forme extérieure (13), une plate-forme intérieure (14), un profil aérodynamique (18) qui s'étend entre lesdites plate-forme extérieure (13) et plate-forme intérieure (14), une suspension extérieure (19) selon une connexion capable de pivoter entre l'aube (10) et le support d'aubes (16), et un segment de collerette intérieure (23) qui s'étend de manière radiale vers l'intérieur à partir de la plate-forme intérieure (14) ;
**caractérisé en ce que** les segments de collerette (12) comprennent :
une poutre en I dotée d'un élément horizontal supérieur (20), d'un élément horizontal inférieur (21), d'une âme verticale (22), d'une fixation (25) au support d'aubes (16), et d'un bras (26) qui s'étend à partir de l'élément horizontal inférieur (21) dans une direction axiale sous le segment de collerette intérieur (23), destiné à soutenir la plate-forme intérieure (14) de l'aube (10) et à calfeutrer un espace situé entre la plate-forme intérieure (14) et l'élément horizontal inférieur (21) ;
le procédé étant **caractérisé par** les étapes consistant à :
- monter les aubes (10) sur le support d'aubes (16) en mettant en prise la suspension extérieure (19) en vue d'une connexion capable de pivoter ;
- mettre en prise le bras (26) de l'élément horizontal inférieur (21) et le segment de collerette intérieur (23) à partir d'une position intérieure de manière radiale ;
- pousser les segments de bâti (12) contre le support d'aubes (16) et monter la fixation (25) sur le support d'aubes (16).
